# EUROPEAN PATENT APPLICATION

(11) **EP 4 841 579 A1**
(43) Date of publication of application: **18.11.2026**
(21) Application number: 25305682.4
(22) Date of filing: 14.05.2025
(51) Int. Cl.: G06V 10/74, G06V 10/764, G06V 10/82, G06V 20/64, H04N 19/597

(54) **GENERATING ORIGINAL VIEWS FROM A 3DG MODEL IN A CAPTURE AGNOSTIC COMPRESSION FRAMEWORK - AI SOLUTION**

(71) Applicant: InterDigital CE Patent Holdings, SAS, 75017 Paris (FR)
(72) Inventor: SABATER, Neus, 35830 BETTON (FR); THUDOR, Franck, 35000 RENNES (FR); SANDRI, Gustavo, 35510 CESSON-SEVIGNE (FR); CHUPEAU, Bertrand, 35700 RENNES (FR)
(74) Representative: Rittner, Karsten

(57) **Abstract**

Some embodiments of a method may include: obtaining a 3D Gaussian (3DG) model of a scene; obtaining information indicating two or more original views of the scene; selecting a test view of the scene; generating a test image of the scene from the test view; and determining a similarity level for the test view, wherein the similarity level indicates a level of similarity between the test view of the scene and one of the two or more original views of the scene.

## Description

### INCORPORATION BY REFERENCE

The present application incorporates by reference in their entirety the following applications: European Patent Application Serial No. EP25305052, entitled "ESTIMATING THE MULTI-VIEW VIEWPOINT REGION IN A CAPTURE-AGNOSTIC 3D GAUSSIAN COMPRESSION FRAMEWORK" and filed January 16, 2025 ("'052 application").

### BACKGROUND

The present application is related to 3D Gaussian (3DG) models.

### SUMMARY

An example method in accordance with some embodiments may include: obtaining a 3D Gaussian (3DG) model of a scene; obtaining information indicating two or more original views of the scene; selecting a test view of the scene; generating a test image of the scene from the test view; and determining a similarity level for the test view, wherein the similarity level indicates a level of similarity between the test view of the scene and one of the two or more original views of the scene.

For some embodiments of the example method, obtaining the 3DG model of the scene includes generating the 3DG model of the scene using at least one of the two or more original views of the scene.

Some embodiments of the example method may further include extracting one or more features from the test image of the scene.

For some embodiments of the example method, determining the similarity level for the test view includes: determining a view classification for the test view based on the extracted one or more features, wherein the view classification indicates a level of likelihood that the test view is one of the two or more original views of the scene; and setting the similarity level equal to the view classification.

For some embodiments of the example method, determining the similarity level for the test view includes: passing the test image through a trained neural network; and generating the similarity level using the trained neural network.

For some embodiments of the example method, determining the similarity level for the test view includes: passing the test image through a Multi-Layer Perceptron (MLP); and generating the similarity level using the MLP.

Some embodiments of the example method may further include training a neural network, wherein determining the similarity level for the test view includes using the trained neural network

For some embodiments of the example method, training the neural network includes: assigning the two or more original views of the scene as a first set of views; generating a second set of views of the scene different from the first set of views; and training the neural network using the first and second set of views of the scene.

Some embodiments of the example method may further include generating a new set of views of a scene different from the scene associated with the first set of views, wherein a dataset associated with the new set of views is different than a dataset associated with the first set of views; and re-training the neural network further using the new set of views.

For some embodiments of the example method, the similarity level indicates a level of likelihood that the test view is one of the two or more original views of the scene.

For some embodiments of the example method, the similarity level is a number between 0 and 1.

For some embodiments of the example method, the similarity level is either 0 or 1.

Some embodiments of the example method may further include: encoding the 3D Gaussian (3DG) model of the scene as a first bitstream; and encoding information about a neural network as a second bitstream.

For some embodiments of the example method, wherein obtaining the 3D Gaussian (3DG) model of the scene includes: receiving a first bitstream from a device; and decoding the first bitstream to obtain the 3D Gaussian (3DG) model of the scene, and wherein obtaining the information indicating two or more original views of the scene includes: receiving a second bitstream from the device; and decoding the second bitstream to obtain information about a neural network.

An example apparatus in accordance with some embodiments may include: a processor; and a memory storing instructions operative, when executed by the processor, to cause the apparatus to perform any one of the methods listed above.

### BRIEF DESCRIPTION OF THE DRAWINGS

The following detailed description will be better understood when read in conjunction with the appended drawings, in which there are shown examples of one or more of the multiple embodiments of the present application. It should be understood, however, that the embodiments described herein are not limited to the precise arrangements and instrumentalities shown in the drawings. In the drawings:
FIG. 1 is a system diagram illustrating an example set of interfaces for a system according to some embodiments.
FIG. 2 is a process diagram illustrating an example view position analysis process according to some embodiments.
FIG. 3A is an image showing an example image from an original view according to some embodiments.
FIG. 3B is an image showing an example image from a generated view according to some embodiments.
FIG. 4 is an image showing an example rendered image according to some embodiments.
FIG. 5 is a process diagram illustrating an example view position classification process according to some embodiments.
FIG. 6 is a schematic illustration showing an example 3DG model for an object centric topology according to some embodiments.
FIG. 7 is a flowchart illustrating an example view classification process according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

In describing the various embodiments of the present application, certain terminology is used herein for convenience only and should not be considered as limiting such embodiments. In the drawings, the same reference numerals are employed for designating the same elements throughout the several figures and the present description.

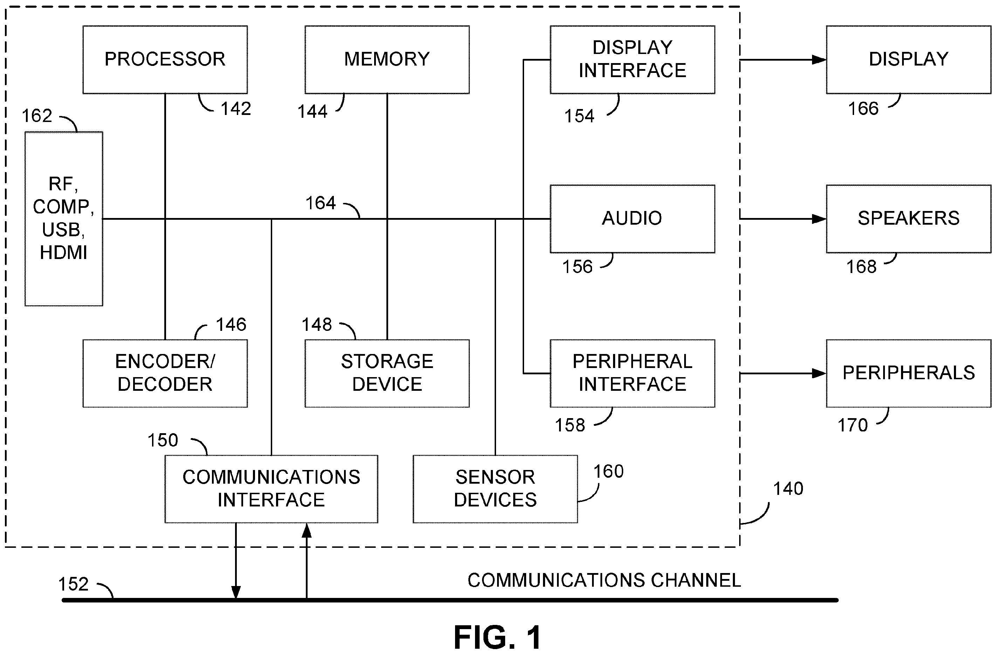

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any eXtended Reality (XR) device/node which may come in variety of form factors. Typical UE (e.g., XR UE) may include, but not limited to the following: Head Mounted Displays (HMD), optical see-through glasses and video see-through HMDs for Augmented Reality

(AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

During the last year or so, different volumetric representations have been proposed to be used in the context of New View Generation (NVG). New views are generated from an arbitrary viewing angle of a scene when only a limited number of input views have been captured. In particular, 3D Gaussian (3DG) splatting has emerged as a new scene representation that is able to realistically render with high quality volumetric data from a multi-view capture. *See gsplat*, NERFSTUDIO TEAM, *available at:* docs<dot>gsplat<dot>studio/main ("*gsplat*") and Kerbl, Bernhard, et al., 3D Gaussian Splatting for Real-Time Radiance Field Rendering, 42:4 ACM TRANS. ON GRAPHICS 139-164 (2023).

Furthermore, 3DG splatting avoids unnecessary computation in the empty space and achieves real-time rendering and a fast training time. In fact, Gaussian splatting has already been used in the past in the computer graphics community, but recently, with the advent of artificial intelligence and the arrival of very powerful GPUs, new learning techniques have become popular, creating a paradigm-shift in the realm of 3D scene representation.

However, the main drawback of 3DGs is that 3DGs requires a large amount of memory for the storage of the Gaussians and compression may be used for its transmission. In this context, the MPEG group of experts is exploring the task of 3D Gaussian compression. There are two exploratory tracks in MPEG for 3DG compression: one in which the input views are known, and one in which the input views are not known. The present application addresses the "agnostic" track, which considers that the multi-images (or multi-videos) are unknown. The goal is to compress a set of 3D Gaussians for which only the main topology of the input image positions is known. The input image positions include: object-centric, forward facing, and unbounded scene.

The agnostic track assumes that the input views as well as their positions are unknown. This assumption means that the aimed task is to encode a set of 3D Gaussians that have been generated from different viewpoints that are unknown. However, the coding task may benefit from some views generated from the initial set of 3D Gaussians. Also, for the sake of evaluation, views may be rendered from the input 3DGs and compared with rendered views from a reconstructed 3DGs.

The interest in rendering views from the input 3DGs of an agnostic framework is because such views may be considered as a ground-truth and may replace the role of the real captured views. While the rendering operation is well known and may be achieved in real time, a major issue is the position from which the views need to be rendered. Indeed, having the information of the coarse topology of the input camera positions (object centric, forward facing, or unbounded scene) is not enough, and the region of potential image positions needs to be delimited.

There are a lot of recent research works on the generation of 3DGs and its applications, but the research community, as understood, seems to have barely addressed the compression problem, especially the agnostic compression problem. As understood, no solution to this problem has been proposed in the literature.

The '052 application discusses this problem. The present application uses artificial intelligence (AI) instead of traditional computer vision methods.

The present application, for some embodiments, determines the view positions from which the input 3D Gaussians have been generated in case this information is not available. In other words, given a set of 3D Gaussians, a neural network is specifically trained to determine if a given view position is one of the view positions of the original multi-view used to generate the 3D Gaussian model.

The present application takes advantage of the large amount of multi-view data that is available to train a generic network whose task is to determine if a given view has been used to generate the 3D Gaussian model. In this manner, given the trained network and a 3D Gaussian model, a discrete number of views may be generated uniformly from all directions using the model. The network selects the views corresponding to the original view positions or very close positions.

Such a network may be used at an encoder or a decoder. In this case, the bitstream includes the network coefficients that may be encoded using neural network compression (NNC) or any neural network compression method.

Consider the set of 3D Gaussians and the image rendering operation. A 3DG object is an object in 3D space according to Eq. 1: $G \left(X\right) = {e}^{- \frac{1}{2} {\left(X-μ\right)}^{T} {Σ}^{- 1} \left(X-μ\right)}$ (1)

The 3DG object may be characterized by its center *µ* = (*x, y, z*); a 3D covariance matrix Σ, in which Σ may be decomposed into a scaling matrix *S* (with parameters *s*₁, *s*₂ and *s*₃); and a rotation matrix *R* (encoded into a unit quaternion *q* with coefficients *q*₁, *q*₂ , *q*₃ and *q*₄) for differentiable optimization. Besides the geometric description of each 3DG, other attributes may be considered, such as the opacity *α* and the color *c*, which is usually a list of spherical harmonics {*cₙ*|*n* = 1, *... , N*}*.*

Given a list of 3D Gaussians representing a 3D scene and the image position of a new view, a synthetized image is generated in the new position via projection of all 3D Gaussians in the image plane. This operation, also called splatting corresponds to the α-blending of the different Gaussians. Given a sorted list of 3D Gaussians *N*, the color of a pixel in the new image is given by Eq. 2: $C = {\sum }_{i ∈ N} {c}_{i} α {′}_{i} {\prod }_{j = 1}^{i - 1} \left(1-α{′}_{j}\right)$ (2) in which *cᵢ* is the learnt color of the *i*-th Gaussian; *α'ⱼ = αⱼ gⱼ*(*x*); *αⱼ* is the *j*-th Gaussian opacity; and *gⱼ*(*x*) is the *j*-th Gaussian projection on the new image plane.

Considering a set of 3DGs in which the initial views are not available anymore, the positions where the initial images have been captured may be determined. The present application uses an AI-based method for some embodiments. The training of a neuronal network with an annotated dataset is used so that the network is able to provide positions from where the model was generated for a dataset that the network has never seen before.

### Network Design

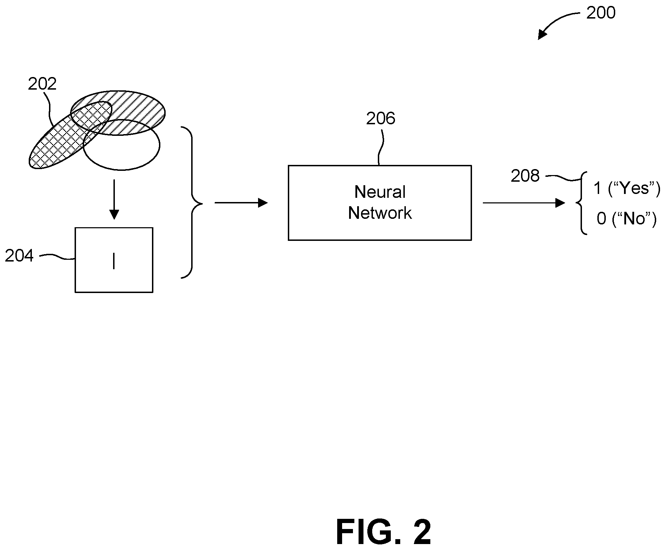

FIG. 2 is a process diagram illustrating an example view position analysis process according to some embodiments. For some embodiments, the neural network in this application is designed to answer the following question: "Given a 3DG model and a view *I* generated from a 3DG model in a specific view position, does the position and frustum of *I* coincide with one of the original views used to create the 3DG model?".

In the process 200 of FIG. 2, a 3DG model 202 and an image *I* (204) (which is generated from a view using the 3DG model 202) are inputs into a neural network 206. The task of the network 206 is to consider the question posed above and to produce an answer 208 of "yes" or "no", which correspond to the values of 1 or 0, respectively. Furthermore, the neural network 206 determines if the position of *I* is one of the positions of the original multi-view.

For some embodiments, the final output of the network is a value inside the interval [0,1] corresponding to the likeliness to be close to the positions of the original multi-view images. In this situation, a value of 0 indicates that the tested image is not in the same original positions. For non-zero values, the higher the value, the higher the likelihood to be close to one of the original positions.

The rationale behind such a network design is that the views generated from the 3DG model at exactly same positions than the original views are of high quality by construction. A 3D Gaussian generator optimizes the list of Gaussian positions and attributes such that the 3D Gaussian generator generates the best image quality at the original multi-view positions.

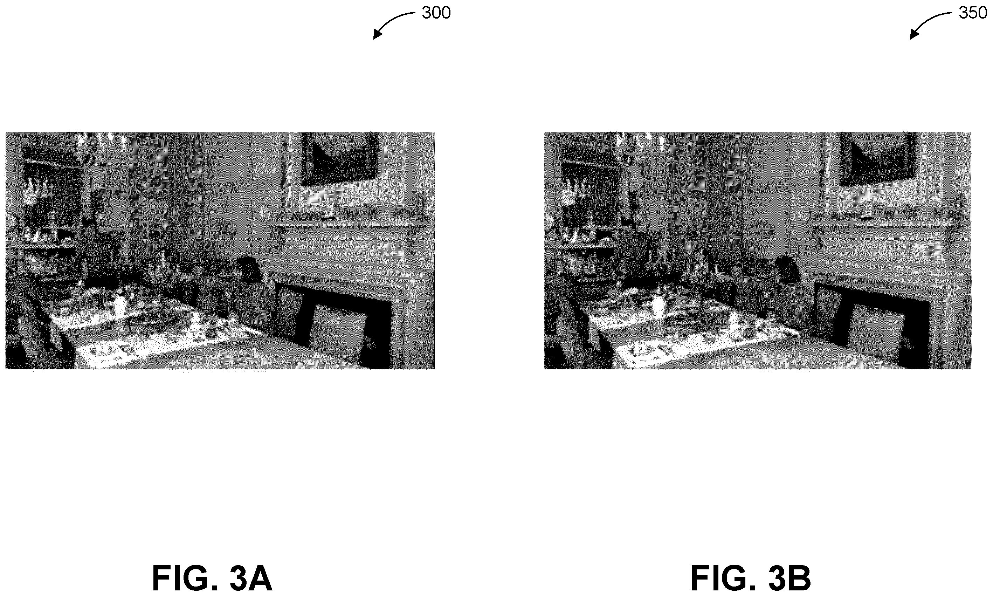

FIG. 3A is an image showing an example image from an original view according to some embodiments. FIG. 3B is an image showing an example image from a generated view according to some embodiments. FIG. 3A shows an image 300 from an original view of the initial multi-view of the sequence "Breakfast". FIG. 3B shows a corresponding rendering 350 from a 3D Gaussian model. Since the rendered view is at the exact same position as the original, the resulting view is of high quality, and differences are unnoticeable.

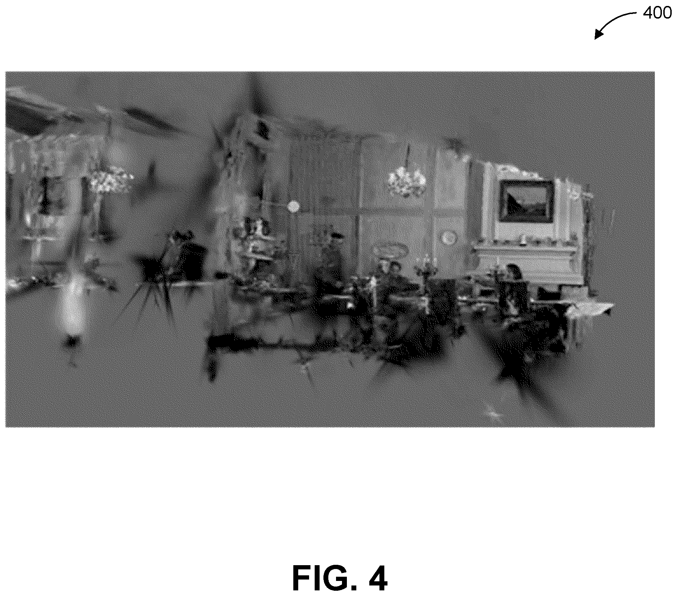

FIGs. 3A and 3B illustrate that the difference between the generated view from the model and the original view is unnoticeable. On the other hand, generated views that are not in the same exact positions but close are of good quality but not as high quality as the original view. For instance, more blur may appear. Also, views that are really far from the original positions, such as behind the scene, or too far from the scene, generate visible artifacts on the views. Such artifacts may include flying Gaussians or completely unstructured Gaussians. See FIG. 4. In all these situations, the network learns the artifacts and the nature of the errors generated from generating views from wrong positions so that the network may provide the correct classification of views.

FIG. 4 is an image showing an example rendered image according to some embodiments. FIG. 4 shows a rendered image 400 from the same 3D Gaussian model used in FIG. 3B for the sequence "Breakfast" but from a totally different viewpoint. The scene was originally captured with a coplanar camera rig, and all the cameras have a similar frustum. This rendering 400 is done at approximately 90 degrees from the original position. Missing parts of the scene appear in grey. Also, many artifacts, such as floating projected Gaussians or blur, appear. The neural network learns these types of artifacts.

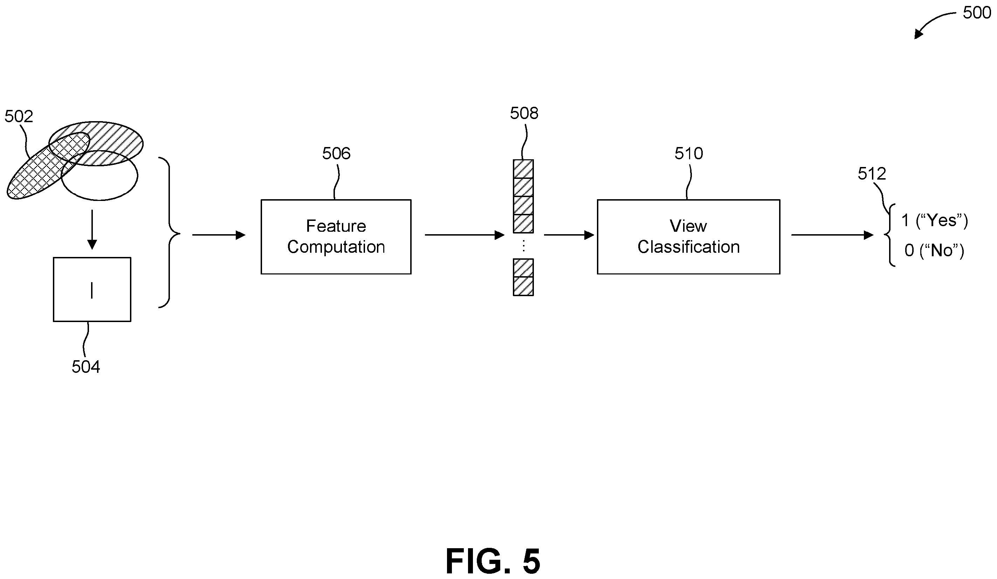

FIG. 5 is a process diagram illustrating an example view position classification process according to some embodiments. A generalization of the network may include the treatment of several views at the same time. For instance, if 10 views are generated from the 3D model and need to be tested, the network may input the 10 views into the network and output a sequence of 10 values equal to 0 or 1 (or 10 values in the interval [0,1]). These values correspond to the same position information for each of the corresponding views.

The network may include several layers and may be a Convolutional Neural Network (CNN) or a fully connected network with a Multi Layer Perceptron (MLP). The network may use a first set of layers to output a feature vector corresponding to the input image. The network may use another set of layers or a fully connected layer corresponding to the classifier to output the final result of 1 or 0 (or a value in the interval [0,1]).

For some embodiments, the neural network may be split into two subnetworks with different tasks. The first subnetwork extracts the features of the input image. The second subnetwork classifies the view as either being among the original multi-view images or being not among the original multi-view images. This classification may be a soft classification with final values in the interval [0,1].

In the process 500 of FIG. 5, a 3DG model 502 and an image *I* (504) (which is generated from a view using the 3DG model 502) are inputs into a feature computation block 506. A set of features 508 are extracted from the input image. The set of features 508 are inputs to a view classification process 510. The view classification process 510 generates a classification 512.

### Network Training

In order to train the neural network, a large annotated dataset made of a list of tuples (*M*, I, Tag) are defined. *M* is the 3D Gaussian Model. *I* is an image generated from *M* for a particular view. Tag={0,1} is the answer to the question "Is the position of *I* among the original multi-view positions?".

For some embodiments, view *I* is not generated but described by its corresponding calibration parameters with respect to a world coordinate system. In this case, the view *I* may be generated by splatting the 3DG model in the image plane described by the calibration parameters.

To create the list of tuples, a very large set of multi-view images and its corresponding 3DG model per multi-view dataset may be considered. For each 3DG model, the following example actions may be performed.

Step 1: Consider all views in the original multi-view dataset. These views are the real captured views and are labelled "yes".

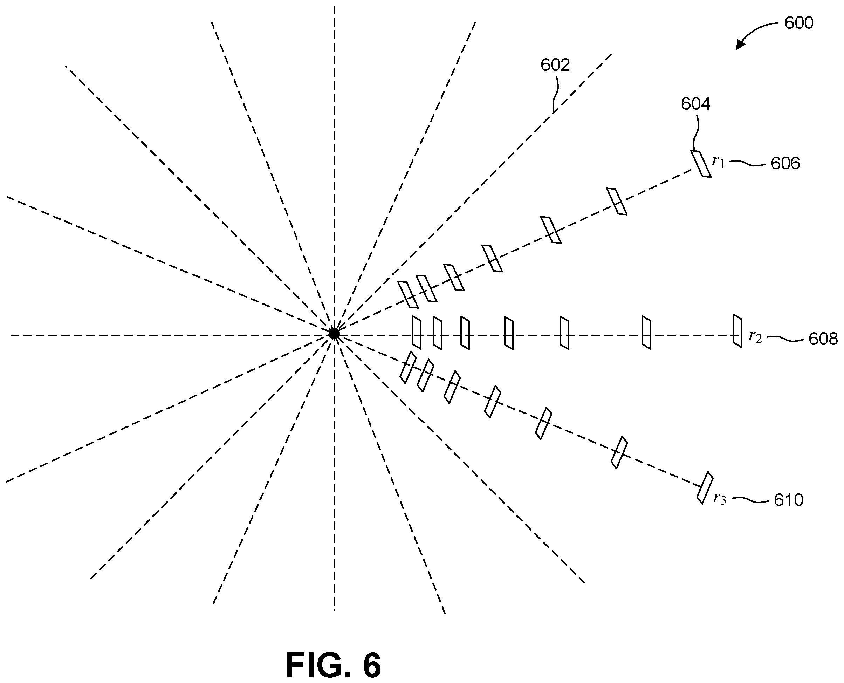

Step 2: Generate new views from the 3DG model in positions different from the positions of the original multi-view. Such new views are generated from all directions and from different distances regardless of the scene. For some embodiments, consider the center of gravity of the 3DG model as the center of gravity of the point cloud determined by the 3DG centers. Then, consider a fixed number of directions uniformly distributed in all directions and at a fixed number of distances with respect to the center of gravity. For each direction and distance to the center, generate a new view if the position does not belong to initial positions in the original multi-view. FIG. 6 illustrates example positions of the generated views for the corresponding 3DG model. If one of the generated views is very close to a real capture position, the view may not be considered. All generated views are labelled "no".

Step 3: Consider all views from Step 1 and Step 2. The total set of views with the corresponding tag of "yes" and "no" is the annotated training dataset for the given scene.

The annotated training dataset (Steps 1 and 2) is composed of a large number of 3D scenes, regardless of the geometry and number of views in the original multi-view. Ideally, this large group of scenes is as diverse as possible. For some embodiments, the group of scenes may include: (1) different scenes with different people, object, animals and backgrounds; (2) object centric, forward facing and unbounded scenes; (3) real scenes and computer-generated scenes; (4) outdoor and indoor scenes; (5) scenes with different illuminations; (6) scenes captured with professional and consumer devices; (7) scenes captured with different synchronized devices or one moving device capturing a static scene; (8) scenes captured with heterogeneous devices, such as different image resolution or different devices; and/or (9) scenes captured from a small and a large number of initial positions.

The network may be trained with a diverse number of scenes so the network is robust to different scenes that the network has never seen before. Also, the associated 3DG models for each multi-view set of images may or may not be generated with the same method. If the same method has been used, the network will learn the artifacts produced with a specific 3D Gaussian generator (e.g., a version of the gsplat software available on the *gsplat* website). But, different generators may be used to make the network more robust to the generator.

### Use of the Network

In an agnostic framework, the initial views from which the 3DG model has been generated are not kept or transmitted. In this context, the ground-truth is the set of views generated from the 3DG model at the right locations. However, the right image locations are also unknown. The use of the network at the encoder or at the decoder may be used to optimize the coding scheme using as ground-truth the images at the right locations.

The described network may be trained only once and then, for each new scene modelled in a 3DG agnostic framework, the network may be used to determine if a given view position is in the original multi-view data. In this scenario, even if the training involves a great computational burden, use of the network (the so-called inference), may not be a computational burden.

However, if a new capturing device or a new 3D Gaussian generator appears one day that is essentially different from the previous capturing devices or 3DG generator, the network may be trained again by adding new data or using a new 3DG model generator.

### Network Fine-Tuning

A generic network may be trained to learnt if the views generated from a 3DG model are positioned at the same position (or close) than the original capture views. The network learns when the resulting views are of good quality. The network also learns the specific artifacts of view generation from 3DG models.

Some scenes may have specificities in term of materials or appearance. In this case, the network may be fine-tuned with a given dataset to overfit to such particular data. The network may be adapted to the specificities of a given dataset. In this case the information in the bitstream may include information that is specific to each multi-view dataset

FIG. 6 is a schematic illustration showing an example 3DG model for an object centric topology according to some embodiments. FIG. 6 is done in 2D for the sake of clarity. FIG. 6 shows an object centric topology, but other topologies are also valid. From the center of gravity of the 3DG model, different directions r 606, 608, 610 are considered. For each direction 602, different images 604 have been generated. Only images 604 for three directions 606, 608, 610 appear in this drawing 600. Each image plane 604 is orthonormal to the corresponding direction and is placed at a different distance from the bounding box center.

For some embodiments, an advantage of the present application is that input views may be generated even when the compression task is agnostic of the capture. Such estimated input views may be used during the pre-processing and compression tasks. For some embodiments, the bitstream may contain information about the network so that the information may be used on the decoder side.

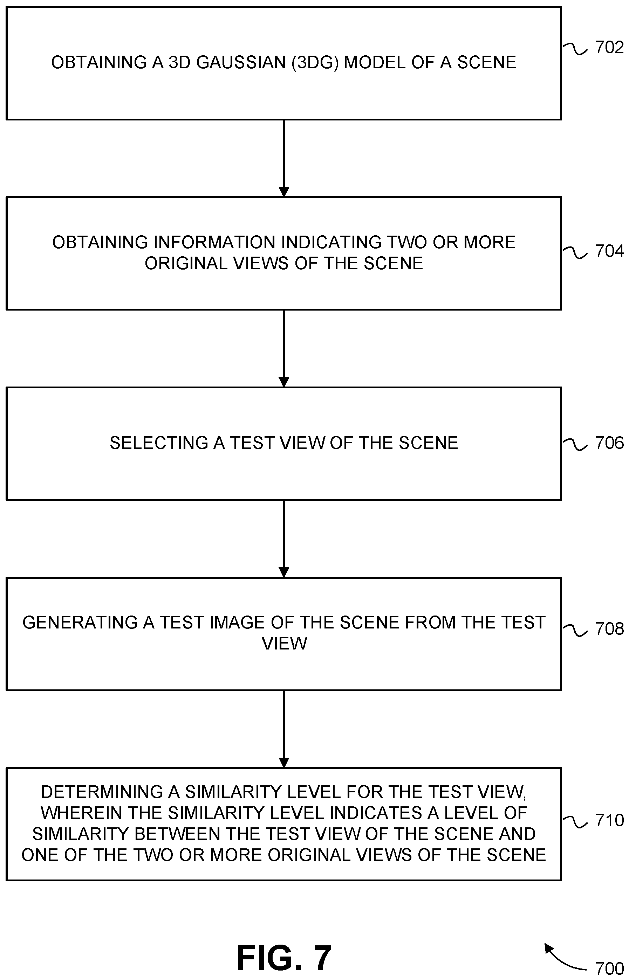

FIG. 7 is a flowchart illustrating an example view classification process according to some embodiments. For some embodiments, an example process 700 may include obtaining 702 a 3D Gaussian (3DG) model of a scene. For some embodiments, the example process 700 may further include obtaining 704 information indicating two or more original views of the scene. For some embodiments, the example process 700 may further include selecting 706 a test view of the scene. For some embodiments, the example process 700 may further include generating 708 a test image of the scene from the test view. For some embodiments, the example process 700 may further include determining 710 a similarity level for the test view, wherein the similarity level indicates a level of similarity between the test view of the scene and one of the two or more original views of the scene.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a 3D Gaussian (3DG) model of a scene; obtaining information indicating two or more original views of the scene; selecting a test view of the scene; generating a test image of the scene from the test view; and determining a similarity level for the test view, wherein the similarity level indicates a level of similarity between the test view of the scene and one of the two or more original views of the scene.

For some embodiments of the example method, obtaining the 3DG model of the scene includes generating the 3DG model of the scene using at least one of the two or more original views of the scene.

Some embodiments of the example method may further include extracting one or more features from the test image of the scene.

For some embodiments of the example method, determining the similarity level for the test view includes: determining a view classification for the test view based on the extracted one or more features, wherein the view classification indicates a level of likelihood that the test view is one of the two or more original views of the scene; and setting the similarity level equal to the view classification.

For some embodiments of the example method, determining the similarity level for the test view includes: passing the test image through a trained neural network; and generating the similarity level using the trained neural network.

For some embodiments of the example method, determining the similarity level for the test view includes: passing the test image through a Multi-Layer Perceptron (MLP); and generating the similarity level using the MLP.

Some embodiments of the example method may further include training a neural network, wherein determining the similarity level for the test view includes using the trained neural network

For some embodiments of the example method, training the neural network includes: assigning the two or more original views of the scene as a first set of views; generating a second set of views of the scene different from the first set of views; and training the neural network using the first and second set of views of the scene.

Some embodiments of the example method may further include generating a new set of views of a scene different from the scene associated with the first set of views, wherein a dataset associated with the new set of views is different than a dataset associated with the first set of views; and re-training the neural network further using the new set of views.

For some embodiments of the example method, the similarity level indicates a level of likelihood that the test view is one of the two or more original views of the scene.

For some embodiments of the example method, the similarity level is a number between 0 and 1.

For some embodiments of the example method, the similarity level is either 0 or 1.

Some embodiments of the example method may further include: encoding the 3D Gaussian (3DG) model of the scene as a first bitstream; and encoding information about a neural network as a second bitstream.

For some embodiments of the example method, wherein obtaining the 3D Gaussian (3DG) model of the scene includes: receiving a first bitstream from a device; and decoding the first bitstream to obtain the 3D Gaussian (3DG) model of the scene, and wherein obtaining the information indicating two or more original views of the scene includes: receiving a second bitstream from the device; and decoding the second bitstream to obtain information about a neural network.

An example apparatus in accordance with some embodiments may include: a processor; and a memory storing instructions operative, when executed by the processor, to cause the apparatus to perform any one of the methods listed above.

One or more embodiments provide a computer program including instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods include one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present application may refer to "determining" various pieces of information. Determining information may include one or more of, for example, estimating, calculating, predicting, or retrieving (e.g., from memory) the information.

The present application may refer to "accessing" various pieces of information. Accessing information may include one or more of, for example, receiving, retrieving (e.g., from memory), storing, moving, copying, calculating, determining, predicting, or estimating the information. Similarly, the present application may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present application or the following claims. Although features and elements are described herein in particular combinations, those of ordinary skill in the art will appreciate that such features or elements may be used alone or in any combination with the other features and elements. It is understood, therefore, that the overall teachings of the present application are not limited to the particular embodiments, implementations, and examples disclosed herein, but are intended to cover variations, modifications, and alternatives as defined by the appended claims and any and all equivalents thereof.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

Various numeric values may be used in the present application, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining a 3D Gaussian (3DG) model of a scene;
obtaining information indicating two or more original views of the scene;
selecting a test view of the scene;
generating a test image of the scene from the test view; and
determining a similarity level for the test view,
wherein the similarity level indicates a level of similarity between the test view of the scene and one of the two or more original views of the scene.

2. The method of claim 1, wherein obtaining the 3DG model of the scene comprises generating the 3DG model of the scene using at least one of the two or more original views of the scene.

3. The method of any one of claims 1-2, further comprising extracting one or more features from the test image of the scene.

4. The method of claim 3, wherein determining the similarity level for the test view comprises:
determining a view classification for the test view based on the extracted one or more features,
wherein the view classification indicates a level of likelihood that the test view is one of the two or more original views of the scene; and
setting the similarity level equal to the view classification.

5. The method of any one of claims 1-3, wherein determining the similarity level for the test view comprises:
passing the test image through a trained neural network; and
generating the similarity level using the trained neural network.

6. The method of any one of claims 1-3, wherein determining the similarity level for the test view comprises:
passing the test image through a Multi-Layer Perceptron (MLP); and
generating the similarity level using the MLP.

7. The method of any one of claims 1-6, further comprising:
training a neural network,
wherein determining the similarity level for the test view comprises using the trained neural network.

8. The method of claim 7, wherein training the neural network comprises:
assigning the two or more original views of the scene as a first set of views;
generating a second set of views of the scene different from the first set of views; and
training the neural network using the first and second sets of views of the scene.

9. The method of any one of claims 7-8, further comprising:
generating a new set of views of a scene different from the scene associated with the first set of views,
wherein a dataset associated with the new set of views is different than a dataset associated with the first set of views; and
re-training the neural network further using the new set of views.

10. The method of any one of claims 1-9, wherein the similarity level indicates a level of likelihood that the test view is one of the two or more original views of the scene.

11. The method of any one of claims 1-10, wherein the similarity level is a number between 0 and 1.

12. The method of any one of claims 1-10, wherein the similarity level is either 0 or 1.

13. The method of any one of claims 1-12, further comprising:
encoding the 3D Gaussian (3DG) model of the scene as a first bitstream; and
encoding information about a neural network as a second bitstream.

14. The method of any one of claims 1-12,
wherein obtaining the 3D Gaussian (3DG) model of the scene comprises:
receiving a first bitstream from a device; and
decoding the first bitstream to obtain the 3D Gaussian (3DG) model of the scene, and
wherein obtaining the information indicating two or more original views of the scene comprises:
receiving a second bitstream from the device; and
decoding the second bitstream to obtain information about a neural network.

15. An apparatus comprising:
a processor; and
a memory storing instructions operative, when executed by the processor, to cause the apparatus to perform the method of any one of claims 1 through 14.
